Europäisches Patentamt

(19)    European Patent Office

Office européen des brevets

(11)    **EP 0 806 631 B1**

(12)    **EUROPEAN PATENT SPECIFICATION**

(45) Date of publication and mention
of the grant of the patent:
**07.11.2001  Bulletin 2001/45**

(51) Int Cl.[7]: **G01C 19/56**

(21) Application number: **97110803.0**

(22) Date of filing: **14.07.1993**

(54) **Angular velocity sensor and its fabricating**

Drehratensensor und Verfahren zu dessen Herstellung

Capteur de vitesse angulaire et méthode pour sa fabrication

(84) Designated Contracting States:
**DE FR GB**

(30) Priority: **03.02.1993  JP 1605493**
**03.02.1993  JP 1612293**

(43) Date of publication of application:
**12.11.1997  Bulletin 1997/46**

(62) Document number(s) of the earlier application(s) in
accordance with Art. 76 EPC:
**93111324.5 / 0 611 949**

(73) Proprietor: **MATSUSHITA ELECTRIC INDUSTRIAL
CO., LTD.**
**Kadoma-shi, Osaka 571-8501 (JP)**

(72) Inventors:
• **Terada, Jiro**
**Hirakata-shi, Osaka 573 (JP)**
• **Takenaka, Hiroshi**
**Sanda-shi, Hyogo.669-13 (JP)**
• **Ushihara, Masaharu**
**Hirakata-shi, Osaka, 573-01 (JP)**
• **Tamura, Masami**
**Uji-shi, Kyoto, 611 (JP)**
• **Nishimura, Hitoshi**
**Osaka 573 (JP)**
• **Kaino, Kikuo**
**Osaka573 (JP)**

(74) Representative: **Grünecker, Kinkeldey,
Stockmair & Schwanhäusser Anwaltssozietät
Maximilianstrasse 58
80538 München (DE)**

(56) References cited:
**EP-A- 0 406 891**

• **PATENT ABSTRACTS OF JAPAN vol. 9, no. 174
(P-374), 19 July 1985 & JP 60 049215 A (JEKO),
18 March 1985,**
• **PATENT ABSTRACTS OF JAPAN vol. 11, no. 2
(P-532), 6 January 1987 & JP 61 181913 A
(MATSUSHITA), 14 August 1986,**
• **PATENT ABSTRACTS OF JAPAN vol. 15, no. 255
(P-1221), 27 June 1991 & JP 03 084412 A
(MATSUSHITA), 10 April 1991,**
• **PATENT ABSTRACTS OF JAPAN vol. 2, no. 127
(E-66), 25 October 1978 & JP 53 093792 A (SEIKO
INSTRUMENTS AND ELECTRONICS)**
• **PATENT ABSTRACTS OF JAPAN vol. 6, no. 136
(E-120), 23 July 1982 & JP 57 062612 A (SEIKO
EPSON)**
• **PATENT ABSTRACTS OF JAPAN vol. 7, no. 14
(C-146), 20 January 1983 & JP 57 170897 A
(CITIZEN)**
• **PATENT ABSTRACTS OF JAPAN vol. 7, no. 154
(E-185), 6 July 1983 & JP 58 063212 A (CITIZEN)**

EP 0 806 631 B1

## Description

The present invention relates to an angular velocity sensor as set forth in the preamble of claim 1 and a method of manufacturing same as set forth in the preamble of claim 3.

A conventional gyroscopic inertia navigation system includes mechanical rotor gyros for determining the direction of a moving object, e.g. an aeroplane or ship.

Such a mechanical gyroscopic system is steady in the performance but bulky in the size thus increasing the cost of production and hardly permitting the application to any small-sized pertinent apparatus.

Also an oscillator-type angular velocity sensor is known for detecting a "Coriolis Force" with its detector while it is vibrating but not rotating. Such a sensor commonly employs a piezoelectric or electromagnetic oscillation mechanism.

The detection of an angular velocity in the sensor is implemented by sensing a vibration torque of a frequency equal to that of the mass of a gyro which is not rotating but vibrating at a constant rate. The vibration torque is known as the Coriolis Force generated when an angular velocity is involved.

EP-A-0 406 891 discloses an angular velocity sensor as set forth in the preamble of claim 1 including a pair of vibratory piezoelectric detecting elements whose detecting planes are disposed in symmetry about a plane containing the sense axis and out of right-angled orientation with respect to this plane. The detecting elements thus arranged assume a widely spread or flat-ended V-shaped configuration as viewed from above. Output signals of opposite polarities received from the respective detecting elements are weighted respectively and added together so as to cancel out unwanted leak component signals. If the characteristics of two sensor elements each including one of the detecting elements are fully equivalent, a leak component signal dependent on a disturbing inertial force can simultaneously be cancelled out.

The vibratory piezoelectric detecting elements and the vibratory piezoelectric drive elements of the assembly are formed from relatively thin elongated rectangular plates, respectively which are each longitudinally aligned end to end and joined together by a joint member with the corresponding planes of detecting element and drive element oriented at an angle of 90° relatively to each other.

From patent abstracts of Japan, volume 9, no. 174 (p. 374) and JP 60049215 A, an angular velocity sensor with tuning fork structure composed of a pair of vibrators is known in which a vibrator structure is made out of two orthogonally joined vibrating pieces, and also piezoelectric elements for driving and detecting bonded to the surfaces of the vibrators. Tuning of the assembly is not described.

From patent abstracts of Japan, volume 2, no.

127 (E-66) and JP 53093792 A a crystal oscillator with tuning fork structure is known which is used as a standard signal generator in a wristwatch. The crystal oscillator is to generate an electric signal of a constant frequency incorporated with an oscillating circuit. To increase the variable frequency range, the so-called Q value of the crystal oscillator must be reduced, which will be attained by reducing the inertia corresponding to the mechanical inductance L1 of each vibrator. This is attained by introducing apertures or cut-out portions in the vibrators to reduce said L1. The position and the size of the aperture are determined such that the resonance frequency of the oscillator is kept constant. Of course, the apertures are formed in two vibrators with exactly the same position, same size and the same pattern.

Patent abstracts of Japan, volume 7, no. 154 (E-185) and JP 58063212 A discloses a crystal oscillator with tuning fork structure in which apertures of specified pattern are formed to both vibrators in order to reduce temperature dependence of proper frequency of the oscillator. By introducing such apertures, the vibrating mode of the vibrator is modified resulting in a reduction of the second order temperature coefficient of the proper frequency. Apertures must be formed in both of the vibrators with the same size and same position. Optimum size and position of those apertures are designed by mechanical vibration analysis of the vibrator, and the apertures are provided before the vibrators are assembled into the oscillator.

The above-mentioned oscillator-type angular velocity sensor can detect the amplitude of the vibration torque to determine an angular velocity. Particularly, a variety of the oscillator-type angular velocity sensors employing piezoelectric elements have been introduced (for example, as depicted in the Proceeding of Japanese Institute of Aviation and Space, Vol.23, No.257, pp. 339-350).

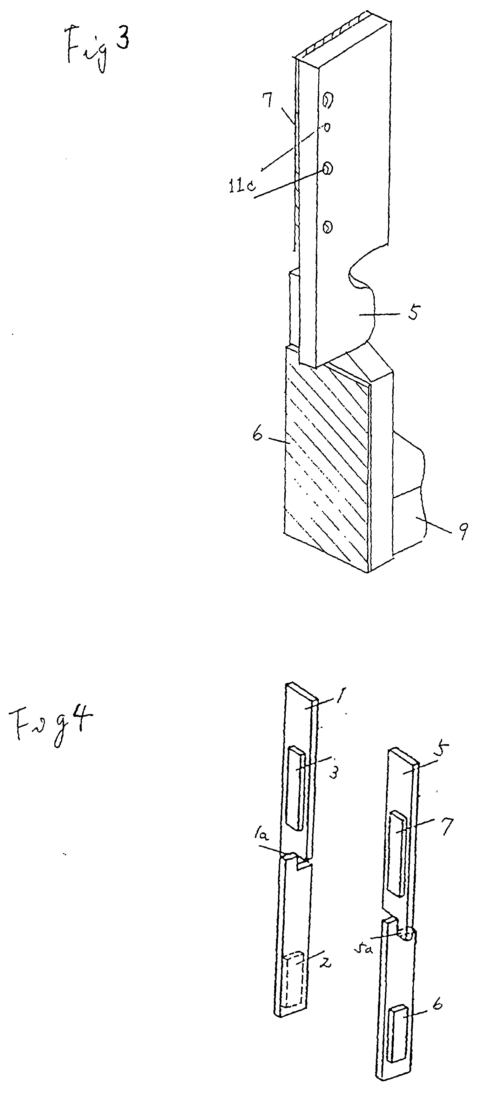

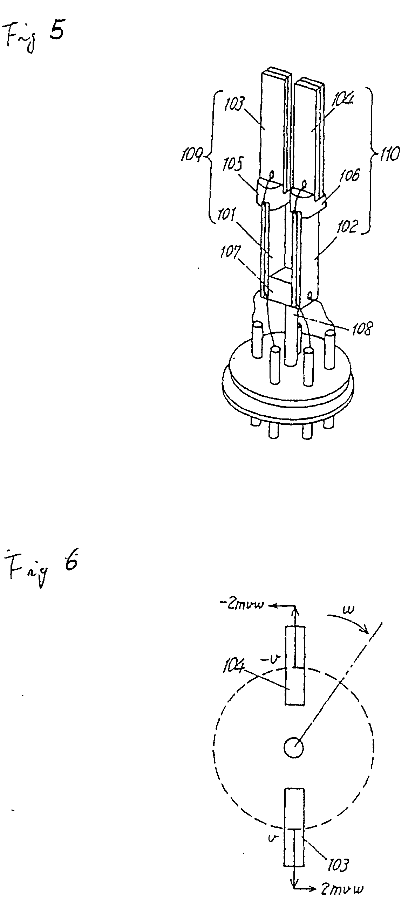

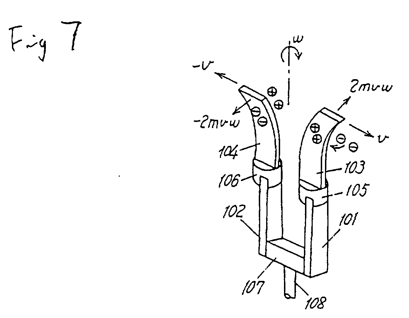

One of the conventional tuning-fork structure oscillator-type angular velocity sensors will now be described referring to Figs. 5 to 7. The arrangement of the angular velocity sensor is best illustrated in Fig. 5 which consists mainly of four piezoelectric bimorphous elements serving as an actuator, a monitor, and a first and a second detectors. The actuator 101 is orthogonally coupled by a joiner 105 to the first detector 103 constituting a first vibrator 109 while the monitor 102 is orthogonally coupled by another joiner 106 to the second detector 104 constituting a second vibrator 110. The first 109 and the second vibrators 110 are coupled to each other by a connector 107 which is supported at a point by a support 108, thus constructing a tuning-fork structure.

When the actuator 101 of piezoelectric bimorphous element is loaded with a sine-wave voltage signal, its inverse piezoelectric effect causes the first vibrator 109 to vibrate. Then, the action of the tuning-fork structure results in vibration of the second vibrator 110.

Accordingly, the monitor 102 of piezoelectric bimorphous element generates a charge on its surface through its piezoelectric action. The charge is proportional to the sine-wave voltage signal applied to the actuator 101. Hence, a constant, continuous action of vibration is developed by controlling the sine-wave voltage signal to the actuator 101 so that the charge generated by the monitor 102 remains uniform in the amplitude.

The action of the angular velocity sensor for producing an output corresponding to an angular velocity involved will be explained referring to Figs. 6 and 7. Fig.6 is a top view of the angular velocity sensor of Fig. 5. As shown, the turning movement at an angular velocity of ω produces a Coriolis force on the first detector 103 which vibrates at a speed of v. The Coriolis force is at a right angle to the speed v and its magnitude is $2mv\omega$ (where m is the equivalent mass at the distal end of the first detector 103).

As the first detector 103 vibrates at the speed v, the second detector 104 is responsive to vibrate at -v and a Coriolis force on the second detector 104 is $-2mv\omega$. The two detectors 103 and 104 are stressed in opposite directions by their respective Coriolis forces thus producing charges on the surface through their piezoelectric actions.

When the speed v of vibration created by fork oscillation is expressed by:

$$v = a \cdot \sin \omega \emptyset t$$

where a is the amplitude of the vibration and ω o is the period of the vibration, the Coriolis force is:

$$F_c = a \cdot \omega \cdot \sin \omega \emptyset t$$

While the angular velocity ω is proportional to the vibration amplitude a, the Coriolis force causes either of the two detectors 103 and 104 to deflect in one direction. Hence, the surface charge Q on the detectors 103 and 104 is expressed by:

$$Q \propto a \cdot \omega \cdot \sin \omega \emptyset t$$

When the vibration amplitude a is controlled to a constant,

$$Q \propto \omega \cdot \sin \omega \emptyset t$$

As understood, the surface charge Q is found proportional to the angular velocity ω and can be converted to a direct current signal through synchronous transaction at ωot.

In theory, if the angular velocity sensor is subjected to a translational movement rather than the rotation, its two detectors 103 and 104 produce two charges of the same polarity and their resultant DC signals are offset each other generating no output.

However, the two signals derived from the unwanted charges are not always canceled to zero because of a symmetrical error and a difference in weight between the two, left and right, prongs of the tuning-fork structure of the conventional angular velocity sensor in which a plurality of piezoelectric bimorphous elements are assembled in a relatively complex manner and may not be identical in the quality.

For overcoming the disadvantages, best care is taken to assemble the tuning-fork structure to ensure the symmetry and balance of the fork structure. So far, such efforts are found unsuccessful and fail to cancel both undesired signals. The two unwanted signals cause the sensor to deteriorate the thermal characteristics and become oversensitive to external interruption or vibration.

The piezoelectric element essentially includes two electrodes at both sides regardless of bimorphous or unimorphous type. The electrodes are commonly formed of silver materials printed onto both surfaces of a piezoelectric substance and thus, become rarely identical in weight, size, and quality due to the presence of unavoidable burrs impairing the symmetry of the tuning-fork structure.

## 3. SUMMARY OF THE INVENTION

It is an object of the present invention to provide an improved angular velocity sensor in which unwanted signals derived from a balancing error of its tuning-fork structure are cancelled and thus, the thermal characteristics will be enhanced and the generation of noise caused by external interruption or vibration will be avoided.

It is another object of the present invention to provide a method of manufacturing an improved angular velocity sensor by eliminating unwanted factors which impair the balance of the sensor during the assembly to ensure lifelong reliability of the performance.

The angular velocity sensor and its method of manufacturing are subject matter of claims 1 and 3, respectively. Preferred embodiments are disclosed in the respective dependent claims.

Also, the first vibrator is formed by bonding a piezoelectric detector element and a piezoelectric actuator element to two, upper and lower, parts of a metal base plate respectively which serve as the first detector and the first actuator and the second vibrator is formed by bonding a piezoelectric detector element and a piezoelectric actuator element to two, upper and lower, parts of a metal base plate respectively which serve as the second detector and the second actuator.

Furthermore, the metal base plate is shaped by turning its two, upper and lower, parts in opposite directions through 90 degrees along a center line defined by two slits extending from both ends inwardly and crosswisely of said base plate so that the two, upper and lower, parts intersect at a right angle to each other. The grinding process is preferably executed by grinding off a part of one corner edge of the plate part of the detector to form a beveled surface. Also, for controlling the balance of the fork assembly during the manufacture, a plurality of apertures may be provided in a specific region of the plate part of the detector by radiation of a laser beam which contributes to the automatic action of the process.

As the two unwanted signals produced by the first and second detectors are offset by each other, the angular velocity sensor provides improved thermal characteristics and prevents the generation of noise caused by external interruption or vibration. As the vibrators are formed by bonding the piezoelectric element to the metal base plate of a particular shape and the electrodes of the piezoelectric element are arranged in a specific manner, the manufacture of the angular velocity sensor will be effected accurately and readily without creating any burrs and dust of the electrodes.

4. BRIEF DESCRIPTION OF THE DRAWINGS

Fig. 1 is a perspective view of an angular velocity sensor of the present invention, before trimming;

Fig. 2 is a flow chart explaining the manufacturing method of the first invention;

Fig. 3 is a perspective view of a part of an angular velocity sensor manufactured in accordance with the present invention;

Fig. 4 is a perspective view of two vibrators of the angular velocity sensor;

Fig. 5 is a perspective view of a conventional angular velocity sensor;

Fig. 6 is an explanatory view showing the principles of detecting an angular velocity with the conventional angular velocity sensor; and

Fig. 7 is a perspective schematic view explaining the detection of an angular velocity with the conventional velocity sensor.

5. DETAILED DESCRIPTION OF THE INVENTION

Preferred embodiments of the present invention will be described in the form of an angular velocity sensor and its manufacturing method referring to the accompanying drawings.

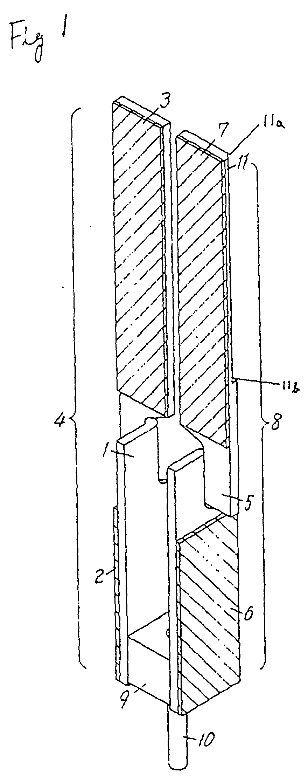

Fig. 1 illustrates an angular velocity sensor of the present invention having a tuning-fork structure which comprises a first vibrator 4, a second vibrator 8, an electrode block 9 coupling the first 4 and the second vibrators 8 to each other, and a support pin 10 supporting at one point the electrode block 9. The first vibrator 4 includes a first eternally elastic metal plate 1 formed by turning its two, upper and lower, parts in opposite directions at center to intersect each other at a right angle, and a piezoelectric actuator 2 and a first piezoelectric detector 3 which are bonded to the two parts of the first eternally elastic metal plate 1 respectively. Similarly, the second vibrator 8 includes a second eternally elastic metal plate 5 formed by turning its two regions parts in opposite directions at center to intersect each other at a right angle, and a piezoelectric actuator 6 and a second piezoelectric detector 7 which are bonded to the two parts of the second eternally elastic metal plate 5 respectively. The eternally elastic metal of this embodiment is elinvar alloy.

The principles of actuation and detection of an angular velocity of the angular velocity sensor of the invention are identical to those of the prior art and will no more be explained.

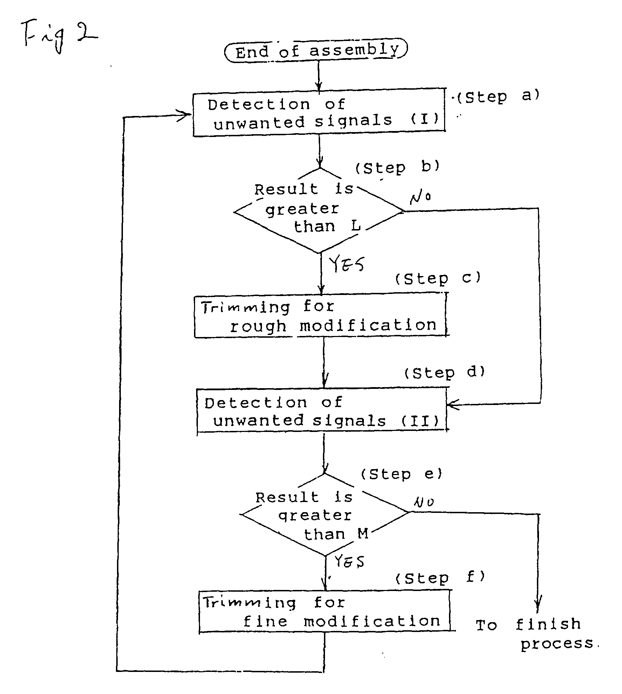

The method of manufacture of the angular velocity sensor will now be described referring to the flow chart of Fig. 2. As depicted previously in the prior art, the first vibrator 4 and the second vibrator 8 assembled in the tuning-fork structure, precisely or not, tend to produce their respective unwanted signals which cannot be offset to zero by each other because of a symmetrical error and a difference in weight between the two vibrators 4 and 8 of which piezoelectric elements are rarely identical in the quality. It is thus provided a trimming process explained later.

The procedure of the method starts with an inspection process (1) for detecting unwanted signals representing the unbalancing factors of symmetrical error in the tuning-fork assembly (Step a). The unwanted signals detected in the inspection process are compared with a reference value L (Step b) and if the signals are smaller than L, the assembly is transferred to the next inspection process (2). If not, it is subjected to the trimming process for rough modification of its detector components (Step c). Then, unwanted signals on the modified detector elements are detected again (Step d) and compared with a reference value M (M>L) (Step e). If the unwanted signals are smaller than M, the assembly is transferred to a finish process. If not, it is subjected to the trimming process for fine modification of its detector component (Step f). The assembly is returned to the inspection process (1) for re-examining the balance. The assembly accepted at the two inspection processes (1) and (2) is only transferred to the finish process.

Fig 3 illustrates an angular velocity sensor of the present invention at which the trimming is executed by providing a plurality of apertures 11c in an edge region of the eternally elastic metal plate 5 of the detector component. The apertures 11c are formed with the use of a laser beam and are different in size for elimination of unwanted signals derived from a balancing error between the two vibrators. This technique allows the laser beam to be controlled to produce the apertures of desired size and/or depth appropriate to balance the tuning-fork assembly of the vibrators, increasing the efficiency of the trimming process.

In the embodiment, each of the first 1 and the second eternally elastic metal plates 5 is formed by turning two, upper and lower, parts of a metal plate through 90 degrees in opposite directions along a centre folding line defined by two crosswise slits extending inwardly from opposite ends to the centre, so that they intersect each other at a right angle. The folding lines 1a and 5a are located at a centre of the width and extends longitudinally from the centre, thus, contributing to the symmetry of the two vibrators.

## Claims

1.  An angular velocity sensor comprising:

    a first vibrator (4) including a first piezoelectric actuator (2) and a first piezoelectric detector (3) joined orthogonally to each other,

    a second vibrator (8) including a second piezoelectric actuator (6) and a second piezoelectric detector (7) joined orthogonally to each other,

    an electrode block (9) coupling said first and second vibrators to form a tuning-fork structure coupled by said electrode block (9) at said actuators (2, 6) so that said first and second vibrators (4, 8) are parallel to each other along a rotational axis,

    **characterized in that**

    said first vibrator (4) is formed by a first metal plate (1) which has two, lower and upper, parts which are turned with respect to one another, the first piezoelectric actuator being a piezoelectric element (2) bonded to the lower part and the first piezoelectric detector being a piezoelectric element (3) bonded to the upper part of said first metal plate (1),

    said second vibrator (8) is formed by a second metal plate (5) which has two, lower and upper, parts which are turned with respect to one another, the second actuator being a piezoelectric element (6) bonded to the lower part and the second piezoelectric detector being a piezoelectric element (7) bonded to the upper part of said second metal plate (5),

    said first and second piezoelectric detector elements (3, 7) are bonded to said upper metal plate portions so as to direct into the same direction,

    and that at least one of said first and second metal plates (1, 5) has a plurality of apertures (11c) different in size and provided in an edge region thereof.

2.  The angular velocity sensor according to claim 1 wherein each of said first and second metal plates (1, 5) has, at nearly middle of its long side, two cross-wise slits extending inwardly from opposite edges to the center.

3.  A method of manufacturing an angular velocity sensor which has a tuning fork structure comprising a first vibrator (4) including a first actuator (2) and a first detector (3) joined orthogonally to each other, a second vibrator (8) including a second actuator (6) and a second detector (7) joined orthogonally to each other, said vibrators being coupled to each other in parallel relationship along a rotational axis by a block (9),
    **characterized in** forming said first and second vibrators (4, 8) each from a metal plate (1, 5) comprising a lower and an upper part which are turned one against the other, and bonding first and second piezoelectric actuator elements (2, 6) to the lower parts of said metal plates (1, 5) and first and second piezoelectric detector elements to the upper parts of said metal plates (1, 5) the first and second piezoelectric detector elements (3, 7) being directed into the same direction,
    and by providing a plurality of apertures (11c) of different size in an edge region of at least one of said metal plates (1, 5) for controlling the operating balance between said two vibrators (4, 8).

4.  The method according to claim 3 wherein said plurality of apertures (11c) are formed by the use of a laser beam.

## Patentansprüche

1.  Winkelgeschwindigkeitssensor, enthaltend:

    einen ersten Vibrator (4) mit einem ersten piezoelektrischen Erreger (2) und einem ersten piezoelektrischen Detektor (3), die orthogonal miteinander verbunden sind;

    einen zweiten Vibrator (8) mit einem zweiten piezoelektrischen Erreger (6) und zweiten piezoelektrischen Detektor (7), die orthogonal miteinander verbunden sind;

einen Elektrodenblock (9), der den ersten und den zweiten Vibrator verbindet, so dass eine Stimmgabelstruktur entsteht, die durch den Elektrodenblock (9) an den Erregern (2,6) verbunden ist, so dass der erste und der zweite Vibrator (4,8) entlang einer Drehachse parallel zueinander sind,

**dadurch gekennzeichnet, dass**:

der erste Vibrator (4) aus einer ersten Metallplatte (5) besteht, die zwei Teile, d.h. einen unteren und einen oberen, hat, die in Bezug zueinander verdreht sind, wobei der erste piezoelektrische Erreger ein piezoelektrisches Element (2) ist, das mit dem unteren Teil verbunden ist, und der erste piezoelektrische Detektor ein piezoelektrisches Element (3) ist, das mit dem oberen Teil der ersten Metallplatte (1) verbunden ist,

der zweite Vibrator (8) aus einer zweiten Metallplatte (5) besteht, die zwei Teile, d.h. einen unteren und einen oberen, hat, die in Bezug zueinander verdreht sind, wobei der zweite Erreger ein piezoelektrisches Element (6) ist, das mit dem unteren Teil verbunden ist, und der zweite piezoelektrische Detektor ein piezoelektrisches Element (7) ist, das mit dem oberen Teil der zweiten Metallplatte (5) verbunden ist,

wobei das erste und das zweite piezoelektrische Detektorelement (3,7) mit den oberen Metallplattenabschnitten so verbunden sind, dass sie in die gleiche Richtung weisen,

und dass wenigstens die erste oder die zweite Metallplatte (1,5) eine Vielzahl von Öffnungen (11c) aufweist, die unterschiedlich groß und in einem Randbereich derselben vorhanden sind.

2. Winkelgeschwindigkeitssensor nach Anspruch 1, wobei die erste und die zweite Metallplatte (1,5) nahezu in der Mitte ihrer Längsseite zwei kreuzweise Schlitze aufweist, die sich von einander gegenüberliegenden Rändern aus nach innen zur Mitte erstrecken.

3. Verfahren zum Herstellen eines Winkelgeschwindigkeitssensors, der eine Stimmgabelstruktur aufweist mit einem ersten Vibrator (4) aus einem ersten Erreger (2) und einem ersten Detektor (3), die orthogonal miteinander verbunden sind, einem zweiten Vibrator (8) aus einem zweiten Erreger (6) und einem zweiten Detektor (7), die orthogonal miteinander verbunden sind, wobei die zwei Vibratoren miteinander parallel längs einer Drehachse über einen Block (9) gekoppelt sind,

**dadurch gekennzeichnet, dass** der erste und der zweite Vibrator (4,8) jeweils aus einer Metallplatte (1,5) hergestellt werden, die einen unteren und einen oberen Teil umfasst, die zueinander verdreht sind, und das erste sowie das zweite piezoelektrische Erregerelement (2,6) mit den unteren Teilen der Metallplatten (1,5) und das erste sowie das zweite piezoelektrische Detektorelement mit den oberen Teilen der Metallplatten (1,5) verbunden werden, wobei das erste und das zweite piezoelektrische Detektorelement (3,7) in die gleiche Richtung weisen,
und dadurch, dass eine Vielzahl von Öffnungen (11c) unterschiedlicher Größe in einem Randbereich wenigstens einer der Metallplatten (1,5) hergestellt werden, um das Funktionsgleichgewicht zwischen den beiden Vibratoren (4,8) zu steuern.

4. Verfahren nach Anspruch 3, wobei die Vielzahl von Öffnungen (11 c) unter Verwendung eines Laserstrahls hergestellt wird.

## Revendications

1. Capteur de vitesse angulaire comprenant :

un premier vibreur (4) comportant un premier actionneur piézoélectrique (2) et un premier détecteur piézoélectrique (3) joints orthogonalement l'un à l'autre,
un deuxième vibreur (8) comportant un deuxième actionneur piézoélectrique (6) et un deuxième détecteur piézoélectrique (7) joints orthogonalement l'un à l'autre,
un bloc électrode (9) couplant lesdits premier et deuxième vibreurs afin de former une structure en diapason couplée par l'intermédiaire dudit bloc électrode (9) au niveau des actionneurs (2, 6) de manière à ce que lesdits premier et deuxième vibreurs (4, 8) soient parallèles l'un à l'autre le long d'un axe de rotation,

**caractérisé en ce que**

ledit premier vibreur (4) est formé d'une première plaque métallique (1) présentant deux parties, une partie inférieure et une partie supérieure, qui sont tournées l'une par rapport à l'autre, le premier actionneur piézoélectrique étant un élément piézoélectrique (2) attaché sur la partie inférieure et le premier détecteur piézoélectrique étant un élément piézoélectrique (3) attaché sur la partie supérieure de ladite première plaque métallique (1),
ledit deuxième vibreur (8) est formé d'une deuxième plaque métallique (5) présentant deux parties, une partie inférieure et une partie supérieure, qui sont tournées l'une par rapport à l'autre, le deuxième actionneur étant un élément piézoélectrique (6) attaché sur la partie inférieure et le deuxième détecteur piézoélectrique étant un élément piézoélectrique (7) attaché sur la partie supérieure de ladite deuxième plaque métallique (5),

lesdits premier et deuxième éléments piézoélectriques détecteurs (3, 7) sont collés sur lesdites parties supérieures des plaques métalliques de manière à être dirigés dans la même direction,

et **en ce qu'**au moins une desdites première et deuxième plaques métalliques (1, 5) présente sur un de ses bords une pluralité d'ouvertures (11c) de tailles différentes.

2. Capteur de vitesse angulaire selon la revendication 1 dans lequel chacune desdites première et deuxième plaques métalliques (1, 5) présente, presque au milieu de son côté long, deux fentes s'étendant depuis les deux bords vers l'intérieur et dans la direction transversale des plaques.

3. Procédé pour la fabrication d'un capteur de vitesse angulaire présentant une structure en diapason comprenant un premier vibreur (4) comportant un premier actionneur (2) et un premier détecteur (3) joints orthogonalement l'un à l'autre, un deuxième vibreur (8) comportant un deuxième actionneur (6) et un deuxième détecteur (7) joints orthogonalement l'un à l'autre, lesdits vibreurs étant couplés l'un à l'autre de manière à être parallèles l'un à l'autre le long d'un axe de rotation autour d'un bloc (9),

**caractérisé en ce qu'**il comprend les étapes consistant à former lesdits premier et deuxième vibreurs (4, 8) chacun à partir d'une plaque métallique (1, 5) comprenant une partie inférieure et une partie supérieure qui sont tournées l'une contre l'autre, et coller les premier et deuxième éléments actionneurs piézoélectriques (2, 6) sur les parties inférieures desdites plaques métalliques (1, 5) et les premier et deuxième éléments détecteurs piézoélectriques sur les parties supérieures desdites plaques métalliques (1, 5), les premier et deuxième éléments détecteurs piézoélectriques (3, 7) étant dirigés dans la même direction,

et à fournir une pluralité d'ouvertures (11c) de taille différente sur un bord d'au moins l'une desdites plaques métalliques (1, 5) afin de contrôler l'équilibre de fonctionnement entre lesdits deux vibreurs (4, 8).

4. Procédé selon la revendication 3 dans lequel ladite pluralité d'ouvertures (11c) est produite au moyen d'un faisceau laser.

Fig 1

Fig 2

( End of assembly )

↓

Detection of
unwanted signals (I) ·(Step a)

↓

Result is
greater
than L — No (Step b)

↓ YES

Trimming for
rough modification (Step c)

↓

Detection of
unwanted signals (II) (Step d)

↓

Result is
greater
than M — No (Step e)

↓ YES

Trimming for
fine modification (Step f)

To finish
process.

Fig 3

Fig 4

*Fig 5*

*Fig 6*

Fig 7